# EUROPÄISCHE PATENTSCHRIFT

(11) **EP 0 473 773 B1**
(45) Veröffentlichungstag und Bekanntmachung des Hinweises auf die Patenterteilung: **23.08.1995**
(21) Anmeldenummer: 91907272.8
(22) Anmeldetag: 19.03.1991
(51) Int. Cl.: H04N 1/32, H04M 11/06

(54) **STEUEREINRICHTUNG FÜR EINE TEILNEHMEREINRICHTUNG ZUM AUTOMATISCHEN UMSCHALTEN DER KOMMUNIKATIONSART**
CONTROL DEVICE FOR A SUBSCRIBER DEVICE FOR AUTOMATIC SWITCHING OF THE TYPE OF COMMUNICATION
DISPOSITIF DE COMMANDE POUR APPAREIL D'ABONNE POUR LA COMMUTATION AUTOMATIQUE DU TYPE DE COMMUNICATION

(30) Priorität: 21.03.1990 DE 4008968
(43) Veröffentlichungstag der Anmeldung: 11.03.1992
(73) Patentinhaber: Grundig E.M.V. Elektro-Mechanische Versuchsanstalt Max Grundig GmbH & Co. KG, 90762 Fürth (DE)
(72) Erfinder: MITTELSTÄDT, Rainer, D-8510 Fürth (DE)
(86) Internationale Anmeldenummer: EP9100541
(87) Internationale Veröffentlichungsnummer: WO9115077

(56) Entgegenhaltungen:
- WO-A-89/03626
- GB-A- 2 183 427
- US-A- 4 800 439
- US-A- 4 868 865

## Beschreibung

Die Erfindung betrifft eine Steuereinrichtung zum automatischen Umschalten der Kommunikationsart beim Nachrichtenaustausch zwischen Teilnehmereinrichtungen eines Nachrichtensystems gemäß dem Oberbegriff des Patentanspruchs 1.

In allen Wirtschaftsbereichen, vor allen Dingen im Bürobereich und in der Verwaltung, werden Textinformationen und neuerdings auch Bildinformationen erfaßt, bearbeitet, archiviert und zu einem Empfänger übertragen. Moderne Teilnehmereinrichtungen sind dabei in allen Bürobereichen zu einem wichtigen Hilfsmittel beim Abwickeln der vielfältigen und unterschiedlichen Aufgaben geworden.

Durch die Konfiguration von Mehrplatzsystemen und deren Einbindung in private, lokale und öffentliche Kommunikationsnetze ist der Kommunikationsprozess immer komplizierter geworden. Die Netzanschlüsse der Teilnehmereinrichtungen ermöglichen den Informationsaustausch, insbesondere den papierlosen Transport von Nachrichten, Informationen und Dokumenten, zwischen gleichen und/oder unterschiedlichen Textverarbeitungssystemen, Ablagesystemen, Rechnern usw. über verschiedene Nachrichtennetze für vermittelte Verbindungen. Beispielsweise sind über die Netzanschlüsse die Bürokommunikationssysteme auch mit Datenverarbeitungsanlagen verbindbar, so daß eine Integrationsmöglichkeit von Text- und Datenverarbeitung und auch eine Einbindung in ein integriertes Digitalnetz (IDN) oder in ein diensteintegrierendes Digitalnetz (ISDN) gegeben ist. Im zunehmenden Maße werden dabei Gerätekombinationen, insbesondere Fernsprechapparate, Anrufbeantworter, Telekopierer usw., über eine Hauptanschlußleitung an das Nachrichtennetz angeschlossen. Diese Teilnehmergeräte (Endgeräte) werden vom Benutzer entsprechend dem Kommunikationswunsch betrieben. Die modernen Teilnehmereinrichtungen können dem Benutzer zwar die Arbeit erleichtern, erfordern jedoch bei der Benutzung in einer Gerätekombination viel Erfahrung. Im Hinblick darauf ist es anzustreben, eine Teilnehmereinrichtung derart auszugestalten, daß sich der Benutzer auch ohne spezielle Kenntnisse, die von den Endgeräten bereitgestellten Möglichkeiten, für seine Aufgabe und Anwendung nutzbar machen kann. Eines der Hauptprobleme, welches dabei zu lösen ist, ist die automatische Umschaltung der Kommunikationsart in der rufenden und/oder gerufenen Teilnehmereinrichtung.

Aus der DE-B-29 51 550 ist eine Anordnung zur Ferneinschaltung und Fernabschaltung von elektrischen Geräteeinheiten, insbesondere Rechenanlagen, bekannt. Eine Zentralstation ist über eine Standard-Schnittstellenübertragungssteuerung, ein Modem und eine Standard-Fernmeldeleitung und/oder Standard-Datenleitung mit den Außenstationen zur Datenfernübertragung verbindbar. Hierzu wird beispielsweise von einer automatischen Wähleinrichtung des Zentralrechners eine Verbindung zum Modem der Außenstationen aufgebaut. Ist die Verbindung zwischen den beiden Modems hergestellt und ist in der Zentralstation vom Modem der Außenstation ein Bestätigungssignal empfangen worden, so werden vom Zentralrechner digitale Steuersignale und Nachrichten abgegeben. Diese gelangen zu einer in der Außenstation nach dem Modem angeordneten, ferngesteuerten Stromversorgungseinrichtung. Die Zentralstation erzeugt und sendet dabei eine sich selbst und die einzuschaltende Geräteeinheit kennzeichnende, codierte Nachricht (Zustandsmeldungsaufforderung) aus. Zur Überprüfung der Verfügbarkeit der Geräteeinheiten muß die Zustandsrückmeldung bestätigt werden, wozu die von der Zentralstation an die Außenstation gesendete Nachricht in der Außenstation einem Zeitgeber zugeführt wird. Der Zeitgeber trennt die Verbindung zwischen Außenstation und Zentralstation, wenn nicht innerhalb der vorgegebenen Zeitspanne die Verfügbarkeit feststellbar ist. Hierzu enthält die Außenstation einen eine vorgegebene Signalfolge (Nachricht) erzeugenden, programmierbaren Festwertspeicher, sowie einen Komparator, der die empfangene codierte Signalfolge (Nachricht) mit jener des Festwertspeichers vergleicht. Ist innerhalb des vorgegebenen Zeitintervalls von beispielsweise 100 ms eine Übereinstimmung bei allen Zeichen feststellbar, so wird die Stromversorgungseinrichtung der Außenstation eingeschaltet.

Mit einer solchen Anordnung ist es möglich, die auf Magnetband, Magnetplatte, Lochstreifen oder -karten, Floppydisk usw. aufgezeichneten Daten dann zu übertragen - z.B. in der Nacht oder an den Wochenenden - wenn die Verkehrsbelastung der Nachrichtennetze nicht so hoch ist und die Gebühren relativ niedrig sind. Weiterhin werden die Rechenanlagen, bzw. Geräteeinheiten, in den Außenstationen nur dann eingeschaltet, wenn eine Datenfernübertragung stattfinden soll. Die Zentralstation und die Außenstationen sind zur Erzeugung und Auswertung der Zustandsmeldungsaufforderung in besonderer Weise ausgestaltet.

Weiterhin ist aus der DE-A-37 21 047 ein Kommunikationssteuerverfahren bekannt, bei dem in einem ersten Verfahrensschritt eine Verbindung über das öffentliche Fernsprechnetz zwischen einer rufenden Station und einer gerufenen Station hergestellt wird. In einem zweiten Verfahrensschritt wird durch Tastenbetätigung in der rufenden Station der Übertragungsmode ausgewählt. Um eine Übertragung von Nachrichten zwischen Telefonapparaten, Teletex-Geräten, Personal-Computern, Faksimile-Geräten oder ähnlichem zu ermöglichen, enthält das Verbund-Kommunikationsendgerät unter anderem eine Systemsteuereinheit. Die Systemsteuereinrichtung steuert den Betrieb des gesamten Verbund-Kommunikationsendgeräts und wickelt verschiedene Kommunikations- und Übermittlungsfunktionen, bzw. verschiedene Datenverarbeitungsoperationen ab. Außerdem weist das Verbund-Kommunikationsendgerät eine Kommunikationssteuereinheit auf, welche die Kommunikations-Prozedurschritte in verschiedenen Kommunikationsart, wie beispielsweise eine Faksimile-, eine Teletex- und eine PC-Kommunikation, durchführen kann. In diesen Kommunikationsarten wird der Wecker in der gerufenen Station nicht aktiviert. Auch beim aus der DE-A-37 21 047 bekannten Kommunikationssteuerverfahren ist ein in besonderer Weise ausgestaltetes Verbund-Kommunikationsendgerät erforderlich.

Gleiches gilt für einen aus der EP-A2-0 310 001 bekannten Telekopierer. Der Telekopierer enthält unter anderem eine Kommunikationssteuerung und eine damit verbundene Steuereinrichtung, welche eine entsprechende Umschaltung der Kommunikationsart vornehmen. Dabei werden die von der rufenden Teilnehmereinrichtung empfangenen Steuersignale ausgewertet und deren Auftreten in bestimmten Zeitfenstern überwacht.

Aus der DE-A-31 07 271 ist eine Zusatzeinrichtung für Anrufbeantworter und Fernkopierer bekannt, bei der zur Umschaltung der Kommunikationsart keine besondere Ausgestaltung von Anrufbeantworter und Fernkopierer erforderlich ist. Die rufende Teilnehmereinrichtung baut eine Sprechverbindung zum Anrufbeantworter auf. Mit der Schlußansage erzeugt der Anrufbeantworter ein Steuersignal, welches der Zusatzeinrichtung zugeführt wird. Das Steuersignal wird in der Zusatzeinrichtung verstärkt und dient zur Betätigung eines dort angeordneten Schalt-Relais, welches den Fernkopierer auf der Empfängerseite einschaltet.

Weiterhin ist aus der DE-B-30 40 541 ein Telekopierer bekannt, bei dem eine Ferngespräch-Anmeldetaste zum Voranmelden eines Ferngesprächs nach der Bildsignal-Übertragung vorgesehen ist. Nach Beendigung der Bildsignal-Übertragung wird ein Gesprächsanforderungssignal (Tonfrequenzsignal) übertragen, auf dessen Empfang hin ein Rufsignal in der gerufenen Teilnehmereinrichtung (Kombination von Telekopierer und Fernsprechapparat) erzeugt wird. Die gerufene Teilnehmerstation quittiert das Gesprächsanforderungssignal, auf dessen Empfang hin auch im Telekopierer der rufenden Teilnehmereinrichtung ein Rufsignal erzeugt wird. Die Rufsignale in der rufenden bzw. gerufenen Teilnehmereinrichtung werden beim Betätigen einer Umschalttaste durch den Benutzer, d.h. Umschaltung von Fernkopieren auf Fernsprechen, beendet.

Schließlich ist aus der DE-A-38 44 425 ein Telekopierer bekannt, welcher einen Anrufbeantworter enthält. Zum Umschalten zwischen Anrufbeantworter- und Telekopiererbetrieb sind eine Steuereinrichtung und ein ein Ruftonsignal (Tonfrequenzsignal CNG) auswertender Empfänger vorgesehen. Die Steuereinrichtung erzeugt ebenfalls, wie die aus der DE-A-31 07 271 bekannte Zusatzeinrichtung, am Ende der Ansage oder mit der Schlußansage ein Steuersignal, welches einer logischen Verknüpfungsschaltung zum Einschalten des Telekopierers auf der Empfängerseite zugeführt wird. Weiterhin wird das Tonfrequenzsignal CED (Kennung der gerufenen Teilnehmereinrichtung) erzeugt, welches zur rufenden Teilnehmereinrichtung übertragen wird. Zum Fernkopieren betätigt dann der Benutzer eine Taste an der rufenden Teilnehmereinrichtung oder dieser sendet automatisch das Ruftonsignal CNG, welches im mit der logischen Verknüpfungsschaltung verbundenen Empfänger ausgewertet wird.

Aus der GB-A-2 183 427 ist eine Steuereinheit für eine Telekommunikationseinrichtung bekannt. Die Telekommunikationseinrichtung besteht dabei aus einem Telefon, einem Anrufbeantworter und einem Faksimilegerät. Bei einem ankommenden Ruf wird in einem ersten Ausführungsbeispiel zunächst durch den Anrufbeantworter eine Nachricht an den Anrufenden ausgegeben. Danach besteht die Möglichkeit eine Nachricht aufzuzeichnen. Anschließend wird, falls ein entsprechendes Steuersignal übertragen wird, dieses ausgewertet, die Rufsignalerzeugung für ein Faksimilegerät gestartet und eine Verbindung zwischen Faksimilegerät und der Anschlußleitung hergestellt. In einem weiteren Ausführungsbeispiel kann ein Anrufender, während er mit dem Anrufbeantworter verbunden ist, durch ein DTMF-Signal das Faksimilegerät auswählen, für das die Ruftonerzeugung gestartet wird.

Von Nachteil ist dabei, daß zuerst immer eine Verbindung mit dem Anrufbeantworter hergestellt wird, was für den Anrufer sowohl zeit- als auch kostenintensiv ist. Weiterhin werden nur DTMF- und keine CNG-Signale ausgewertet, weshalb zur Eingabe der DTMF-Signale immer eine Bedienperson erforderlich ist. Eine automatische Faksimileübertragung, bei der nur CNG-Signale erzeugt werden, ist nicht möglich. Ein weiterer Nachteil besteht darin, daß bei Abheben des Telefons dieses mit dem Anrufbeantworter parallel geschaltet ist. Dadurch können durch beide Endgeräte gleichzeitig Signale über die Anschlußleitung ausgegeben werden.

Der Erfindung liegt die Aufgabe zugrunde, eine in einer Teilnehmereinrichtung angeordnete Steuereinrichtung zum automatischen Umschalten der Kommunikationsart derart auszugestalten, daß keine besondere Ausgestaltung aller Endgeräte der Gerätekombination oder eine Zusatzeinrichtung erforderlich ist.

Diese Aufgabe wird bei einer gattungsgemäßen Steuereinrichtung durch die kennzeichnenden Merkmale des Patentanspruchs 1 gelöst.

Bei der erfindungsgemäßen Steuereinrichtung ist keine zusätzliche logische Verknüpfungsschaltung, wie beim aus der DE-A-38 44 425 bekannten Telekopierer, erforderlich. Durch die Erzeugung eines Rufsignals in der Teilnehmereinrichtung kann eine beliebige Umschaltung auf das der Kommunikationsart entsprechende Endgerät vorgenommen werden. Dadurch wird dem Benutzer die Möglichkeit eröffnet, nach seiner Wahl eines der Endgeräte im Vorrang zu betreiben.

Wird gemäß der Ausführungsform nach Patentanspruch 2 als Kriterium zur Vorrangschaltung die Anzahl der ankommenden Rufe benutzt, so erfordert dies vom Benutzer keine speziellen Kenntnisse des Kommunikationsprozesses und erlaubt auf einfache Art und Weise dem Benutzer eine gezielte Vorrangschaltung des Endgerätes.

Die Ausführungsform nach Patentanspruch 5 weist den Vorteil auf, daß der zusätzliche Aufwand zur Erzeugung des Ruftonsignals CNG für einen Telekopierer (bzw. eines Rufsignals für ein Endgerät) gering ist, da die ohnehin notwendige Stromversorgungseinrichtung mitbenutzt werden kann.

Die Erfindung wird im folgenden anhand einer in der Zeichnung dargestellten Ausführungsform näher beschrieben und erläutert.

Es zeigt:
- Fig. 1: eine Ausführungsform der erfindungsgemäßen Steuereinrichtung für eine Teilnehmereinrichtung eines Nachrichtensystems und
- Fig. 2: einen Programmablaufplan der erfindungsgemäßen Steuereinrichtung.

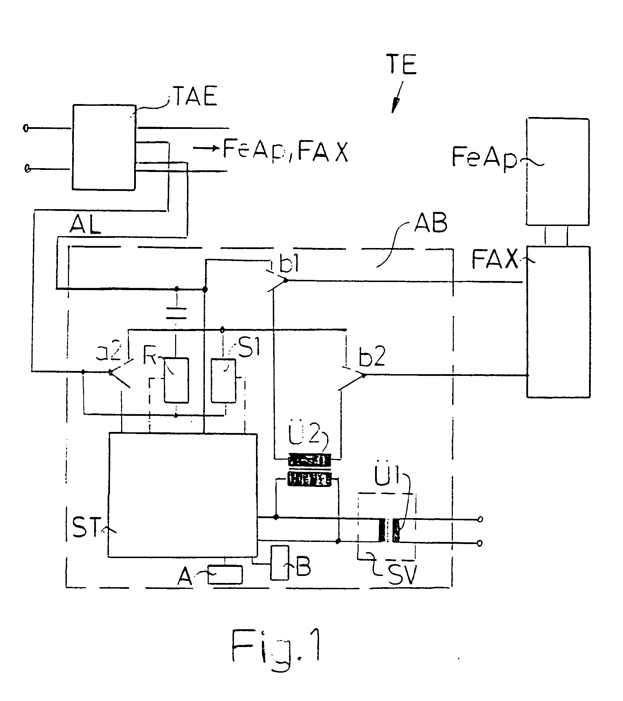

Bei der in Fig. 1 dargestellten Ausführungsform wird von der Anordnung der erfindungsgemäßen Steuereinrichtung in einem Anrufbeantworter ausgegangen. Die erfindungsgemäße Steuereinrichtung kann jedoch in jedem der Endgeräte der Teilenehmereinrichtung TE angeordnet werden.

Die in der Fig. 1 dargestellte Teilnehmereinrichtung TE besteht aus der Kombination von Fernsprechapparat FeAp, Anrufbeantworter AB und Telekopierer FAX. Diese Geräte sind an eine Telekommunikations-Anschlußeinheit TAE angeschlossen und stehen über diese mit nur einer Hauptanschlußleitung AL mit dem Nachrichtennetz in Verbindung. Die Steuereinrichtung ST steuert die verschiedenen Gerätefunktionen des Anrufbeantworters AB Sowie den Austausch vermittlungstechnischer Informationen (z.B. Wählinformationen) zwischen der Teilnehmereinrichtung TE und den Vermittlungsstellen des Fernmeldenetzes.

Der Benutzer gibt zum Verbindungsaufbau zu einem gerufenen Teilnehmer, z.B. am Fernsprechapparat FeAp die Rufnummer ein. Nach hergestellter Verbindung zwischen der rufenden Teilnehmereinrichtung TE und einem im Vorrang geschalteten Endgerät, im Ausführungsbeispiel Anrufbeantworter AB, der gerufenen Teilnehmereinrichtung TE stellt die Steuereinrichtung ST die Kommunikationsart der empfangenen Nachricht fest. Wird beispielsweise von der Steuereinrichtung ST ein Ruftonsignal CNG für einen Telekopierer erkannt, so schaltet die Steuereinrichtung ST automatisch auf den Telekopierer FAX um und steuert die Erzeugung eines Ruftonsignals CNG für den Telekopierer FAX. Falls während der Übertragung des Ansagetextes der Hörer am Fernsprechapparat FeAp abgenommen wird, wird dies von einer Schleifenstromerkennungsschaltung S1 erkannt und gesteuert durch die Steuereinrichtung ST (vorzugsweise ein Mikroprozessor) erfolgt eine Umschaltung auf Fernsprechbetrieb. Weiterhin ist in der Teilnehmereinrichtung TE eine in der Zeichnung nicht dargestellte Sprechpausenerkennungsschaltung mit Hörtonerkennung angeordnet, welche - z.B. bei Sprechpausen länger als 8 sec. oder Erkennen eines Hörtons - ebenfalls ein Steuersignal erzeugt und ein entsprechendes Umschalten bewirkt.

Als Umschalteeinrichtung A, B werden zwei Relais benutzt, wobei die Schaltkontakte der beiden Relais in Serie zueinander liegen. Die Schaltkontakte des zweiten Relais B sind sowohl mit der Hauptanschlußleitung AL als auch zur Weiterleitung des Ruftonsignals CNG mit dem Übertrager Ü1 der Stromversorgungseinrichtung SV oder dem zweiten Übertrager Ü2 verbunden.

Erfolgt die Speisung des Anrufbeantworters AB von der Amtsbatterie aus über die Hauptanschlußleitung AL, so kann die Steuereinrichtung ST durch Steuerung entsprechender Spannungsverdopplungsschaltungen und Schalttransistoren ein Ruftonsignal CNG geforderter Spannungsamplitude erzeugen.

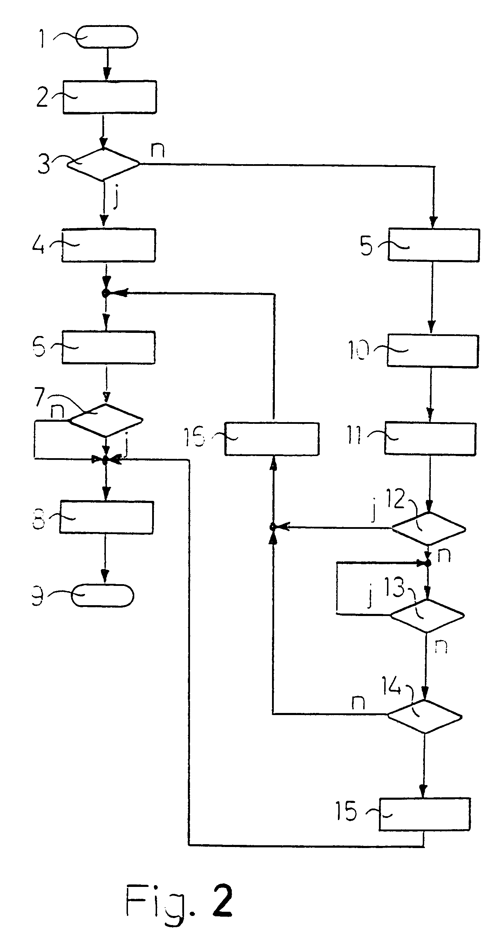

Die Funktionsweise der erfindungsgemäßen Steuereinrichtung wird im folgenden anhand eines in der Fig. 2 dargestellten Programmablaufplans näher beschrieben und erläutert.

Die verschiedenen Sinnbilder des Programmablaufplans sind mit Bezugszeichen versehen, wobei die Innenbeschriftung der verschiedenen Sinnbilder im folgenden durch zwischen Anführungszeichen stehenden Kurzbezeichnungen wiedergegeben werden.

Die Steuereinrichtung ST des Anrufbeantworters AB beginnt mit der Ermittlung der Kommunikationsart nach hergestellter Verbindung zwischen der rufenden Teilnehmereinrichtung TE und dem Anrufbeantworter AB (Bezugszeichen 1 "Start"). Kommt über die Hauptanschlußleitung AL ein Rufsignal an, so wird dies mittels der Ruferkennungsschaltung R erkannt, welche in Folge der Vorrangschaltung des Anrufbeantworters AB die Steuereinrichtung ST des Anrufbeantworters aktiviert (Bezugszeichen 2 "Erster Ruf AB, Amtsschleife"). Die Steuereinrichtung ST überprüft nun, ob von der rufenden Teilnehmereinrichtung TE ein Ruftonsignal CNG der rufenden Teilnehmereinrichtung TE empfangen wird oder nicht (Bezugszeichen 3 "S-FAX-Kennung CNG für 3,2 s?"). Wird von der Steuereinrichtung ST ein Ruftonsignal CNG erkannt, so wird die Ansage gestoppt (Bezugszeichen 4 "Ansage stop") oder eine Ansage gestartet (Bezugszeichen 5 "Guten Tag, hier automatischer Anrufbeantworter und automatischer Telekopierer der Firma X. Nach dem folgenden Hinweiston können Sie eine Nachricht aufsprechen oder eine Telefaxnachricht übermitteln").

Für den Fall, daß die Steuereinrichtung ST ein Ruftonsignal CNG für einen Telekopierer FAX erkannt hat, steuert diese die Erzeugung des Ruftonsignals (Bezugszeichen 6 "AB-Ruftonsignal CNG an E-FAX"). Danach wird mittels der Schleifenstromerkennungsschaltung S1 das Vorliegen des Schleifenstroms regelmäßig überprüft (Bezugszeichen 7 "S1-Kennung < 60 s"). Danach wird der Anrufbeantworter abgeschaltet sowie die Umschaltung auf den Telekopierer FAX vorgenommen (Bezugszeichen 8 "AB trennt Schleife, schaltet auf FAX um und schaltet ab"). Damit ist das Ende des Programmablaufs erreicht (Bezugszeichen 9 "Stop").

Für den Fall, daß die Steuereinrichtung ST keine Ruftonsignale CNG für einen Telekopierer FAX erhalten hat, wird ein entsprechender Hinweiston erzeugt, wie dies in der entsprechenden Ansage angekündigt ist (siehe Bezugszeichen 5 bzw. Bezugszeichen 10 "Hinweiston"). Die Nachricht des rufenden Teilnehmers wird in einem Nachrichtenspeicher des Anrufbeantworters AB aufgezeichnet (Bezugszeichen 11 "Aufzeichnung Start"). Die Steuereinrichtung ST überprüft danach, ob von der rufenden Teilnehmereinrichtung TE im Anschluß an die gesprochenen Nachricht ein Ruftonsignal CNG gesendet wird (Bezugszeichen 12 "S-FAX-Kennung CNG für 10 s"). Wird von der rufenden Teilnehmereinrichtung TE kein Ruftonsignal empfangen, so wird mittels einer Sprechpausenerkennungsschaltung überprüft, ob Sprechpausen länger als 8 s vorliegen oder Hörton erkannt wird (Bezugszeichen 13 "Sprechpause > 8 s oder Hörton?"). Ist dies der Fall, so wird diese Überprüfung mittels der Sprechpausenerkennungsschaltung weiter vorgenommen. Ist dies nicht der Fall, so wird Überprüft, ob ein Sprachsignal empfangen wurde (Bezugszeichen 14 "Sprachsignal empfangen?"). Ist dies der Fall, so erfolgt nun eine Schlußansage (Bezugszeichen 15 "Schlußansage Start") und danach trennt die Steuereinrichtung ST des Anrufbeantworters AB die Schleife auf, schaltet auf den Telekopierer FAX um und schaltet ab (Bezugszeichen 8).

Wurde dagegen kein Sprachsignal empfangen, so wird die Aufzeichnung ebenfalls wie im Falle des Empfangs eines Ruftonsignals CNG gestoppt (Bezugszeichen 16 "Aufzeichnung stop"). Danach erzeugt die Steuereinrichtung ST des Anrufbeantworters AB in der bereits beschriebenen Weise ein Ruftonsignal CNG für den Telekopierer FAX (siehe Bezugszeichen 6).

Die erfindungsgemäße Steuereinrichtung ermöglicht auf überraschend einfache Art und Weise die automatische Umschaltung der Kommunikationsart und kann in allen Endgeräten einer Teilnehmereinrichtung eingesetzt werden.

## Patentansprüche

1. Steuereinrichtung zum automatischen Umschalten der Kommunikationsart, insbesondere zwischen Sprach-, Bilddaten und Textdatenkommunikation, beim Nachrichtenaustausch zwischen Teilnehmereinrichtungen (TE) eines Nachrichtensystems, welche aus einer Gerätekombination von verschiedenen Endgeräten, insbesondere Fernsprechapparate (FeAp), Anrufbeantworter (AB) und Telekopierer (FAX), bestehen und welche steckbar an eine Telekommunikation-Anschlußeinheit (TAE) angeschlossen sind und über diese sowie eine Umschalteinrichtung (A, B) mit nur einer Hauptanschlußleitung (AL) mit dem Nachrichtennetz in Verbindung stehen,
**dadurch gekennzeichnet,**
daß nach hergestellter Verbindung zwischen der rufenden Teilnehmereinrichtung (TE) und einem im Vorrang geschalteten Endgerät der gerufenen Teilnehmereinrichtung (TE) die Steuereinrichtung (ST) des Endgeräts die Kommunikationsart der empfangenen Nachricht feststellt, daß die Steuereinrichtung (ST) mit der in der Hauptanschlußleitung (AL) angeordneten Umschalteinrichtung (A, B) verbunden ist, daß die Steuereinrichtung (ST), falls erforderlich, automatisch eine Umschaltung auf das der Kommunikationsart entsprechende Endgerät vornimmt und die Erzeugung eines Rufsignals für dieses Endgerät steuert und daß eine Schaltung (S1) zur Schleifenstromerkennung den Fernsprechapparat (FeAp) überwacht und bei erkanntem Schleifenschluß die Steuereinrichtung (ST) eine Umschaltung auf den Fernsprechapparat (FeAp) durchführt.

2. Steuereinrichtung nach Anspruch 1, **dadurch gekennzeichnet,** daß als Kriterium zur Vorrangschaltung der verschiedenen Endgeräte die Anzahl der ankommenden Rufe benutzt wird.

3. Steuereinrichtung nach Anspruch 1, **dadurch gekennzeichnet**, daß die Steuereinrichtung (ST) die Erzeugung eines Ruftonsignals (CNG) für einen Telekopierer (FAX) steuert.

4. Steuereinrichtung nach einem oder mehreren der Ansprüche 1 bis 3, gekennzeichnet durch die Anordnung im Endgerät mit der höchsten Priorität.

5. Steuereinrichtung nach Anspruch 3 und 4, **dadurch gekennzeichnet,** daß die Steuereinrichtung (ST) im Anrufbeantworter (AB) angeordnet ist, welcher zur Stromversorgung an das elektrische Leitungsnetz (L) angeschlossen ist, und daß die mit der Steuereinrichtung (ST) verbundene Stromversorgungseinrichtung (SV) zur Erzeugung des Ruftonsignals (CNG) mindestens einen zweiten Anschluß am Übertrager (Ü1) der Stromversorgungseinrichtung (SV) oder einen mit diesem und der Steuereinrichtung (ST) verbundenen zweiten Übertrager (Ü2) aufweist.

6. Steuereinrichtung nach einem oder mehreren der Ansprüche 1 bis 5, **dadurch gekennzeichnet,** daß als Umschalteeinrichtung (A, B) mindestens ein Relais benutzt wird und daß die Schaltkontakte des Relais sowohl mit der Hauptanschlußleitung (AL) als auch zur Weiterleitung des Rufsignals mit dem Übertrager (Ü1) der Stromversorgungseinrichtung (SV) oder dem zweiten Übertrager (Ü2) verbunden sind.

## Claims

1. Control device for the automatic switch-over of the communication type, in particular between speech communication graphic-data and text-data communication, in the message exchange between subscriber devices (TE) of a telecommunication system, which subscriber devices comprise an appliance combination of various terminal appliances, in particular telephone sets (FeAp), answering machines (AB) and facsimile machines (FAX) and which subscriber devices are pluggably connected to a telecommunication terminal loop (TAE) and are connected via the latter and a switch-over device (A, B) by only one direct exchange line (AL) to the telecommunication network, characterized in that after a connection has been made between the calling subscriber device (TE) and a priority-connected terminal appliance of the called subscriber device (TE), the control device (ST) of the terminal appliance ascertains the communication type of the received message, in that the control device (ST) is connected to the switch-over device (A, B) installed in the direct exchange line (AL), in that the control device (ST) automatically performs, if necessary, a switch-over to the terminal appliance corresponding to the communication type and controls the generation of a ringing signal for said terminal appliance, and in that a loop-current detection circuit (S1) monitors the telephone set (FeAp) and, if loop closure is detected, the control device (ST) carries out a switch-over to the telephone set (FeAp).

2. Control device according to Claim 1, characterized in that the number of incoming calls is used as criterion for the priority connection of the various terminal appliances.

3. Control device according to Claim 1, characterized in that the control device (ST) controls the generation of a calling tone signal (CNG) for a facsimile machine (FAX).

4. Control device according to one or more of Claims 1 to 3, characterized by installation in the terminal appliance with the highest priority.

5. Control device according to Claims 3 and 4, characterized in that the control device (ST) is installed in the answering machine (AB), which is connected to the electrical power mains (L) for the purpose of power supply, and in that the power supply device (SV) connected to the control device (ST) has, for the purpose of generating the calling tone signal (CNG), at least a second connection to the transformer (U1) of the power supply device (SV) or to a second transformer (U2) connected to the latter transformer and to the control device (ST).

6. Control device according to one or more of Claims 1 to 5, characterized in that at least one relay is used as switch-over device (A, B) and in that the switching contacts of the relay are connected both to the direct exchange line (AL) and also to the transformer (U1) of the power supply device (SV) or to the second transformer (U2) for the purpose of passing on the ringing signal.

## Revendications

1. Dispositif de commande pour réaliser la commutation automatique du type de communication, notamment entre une communication de données vocales, une communication de données d'images et une communication de données de textes, lors de l'échange d'informations entre des dispositifs d'abonnés (TE) d'un système de transmission d'informations, qui sont constitués par un ensemble combiné de différents appareils terminaux, notamment des postes téléphoniques (FeAp), des répondeurs téléphoniques (AB) et des télécopieurs (FAX), et qui sont raccordés, de manière à pouvoir être enfichés, à une unité de raccordement de télécommunication (TAE) et sont reliés par l'intermédiaire de cette unité ainsi que d'un dispositif de commutation (A,B), au réseau de transmission d'informations, par seulement une ligne de raccordement principale (AL), caractérisé par le fait
qu'une fois la liaison établie entre le dispositif d'abonné appelant (TE) et un appareil terminal, branché de façon prioritaire, du dispositif d'abonné appelé (TE), le dispositif de commande (ST) de l'appareil terminal fixe le type de communication de l'information reçue, que le dispositif de commande (ST) est relié au dispositif de commutation (A,B) disposé dans la ligne de raccordement principale (AL), que dans le cas où cela est nécessaire, le dispositif de commande (ST) exécute automatiquement une commutation sur l'appareil terminal qui correspond au type de communication et commande la production d'un signal d'appel pour cet appareil terminal, et qu'un circuit (S1) servant à identifier le courant de boucle contrôle le poste téléphonique (FeAp) et, lorsqu'une fermeture de boucle est identifiée, le dispositif de commande (ST) exécute une commutation sur le poste téléphonique (FeAp).

2. Dispositif de commande selon la revendication 1, caractérisé en ce qu'on utilise, comme critère de branchement prioritaire des différents appareils terminaux, le nombre des appels arrivants.

3. Dispositif de commande selon la revendication 1, caractérisé en ce que le dispositif de commande (ST) commande la production d'un signal de tonalité d'appel (CNG) pour un télécopieur (FAX).

4. Dispositif de commande selon une ou plusieurs des revendications 1 à 3, caractérisé par son montage dans l'appareil terminal possédant la priorité maximale.

5. Dispositif de commande selon les revendications 3 et 4, caractérisé en ce que le dispositif de commande (ST) est disposé dans le répondeur téléphonique (AB), qui est raccordé, pour l'alimentation en courant, au réseau de conducteurs électriques (L) et que le dispositif d'alimentation en courant (SV), qui est relié au dispositif de commande (ST) et sert à produire le signal de tonalité d'appel (CNG) comporte au moins une seconde borne présente sur le transformateur (Ü1) du dispositif d'alimentation en courant (SV) ou un second transformateur (Ü2), relié à cette borne et au dispositif de commande (ST).

6. Dispositif de commande selon une ou plusieurs des revendications 1 à 5, caractérisé en ce qu'on utilise comme dispositif de commutation (A,B), au moins un relais et que les contacts de commutation du relais sont reliés aussi bien à la ligne de raccordement principale (AL) et également, pour la retransmission du signal d'appel, au transformateur (Ü1) du dispositif d'alimentation en courant (HV) ou au second transformateur (Ü2).
